# FASCICULE DE BREVET EUROPEEN

(11) **EP 3 411 616 B1**
(45) Date de publication et mention de la délivrance du brevet: **06.04.2022**
(21) Numéro de dépôt: 17707632.0
(22) Date de dépôt: 03.02.2017
(51) Int. Cl.: F16L 29/00, F16L 37/36

(54) **DISPOSITIF ET PROCÉDÉ DE CONNEXION**
VERBINDUNGSVORRICHTUNG UND VERFAHREN
CONNECTION DEVICE AND METHOD

(30) Priorité: 03.02.2016 FR 1650838
(43) Date de publication de la demande: 12.12.2018
(73) Titulaire: Parker Hannifin Manufacturing France, 74100 Ville-La-Grand (FR)
(72) Inventeur: TARISSAN, Fabrice, 74370 Villaz (FR)
(74) Mandataire: Germain Maureau
(86) Numéro de dépôt international: PCT/FR2017/050256
(87) Numéro de publication internationale: WO 2017/134406

(56) Documents cités:
- WO-A1-2004/005786
- US-A- 2 799 517
- US-A- 5 483 993
- US-A1- 2014 182 721

## Description

La présente invention concerne un dispositif de connexion, ainsi qu'un procédé de connexion des connecteurs de ce dispositif de connexion.

Les dispositifs de connexion traditionnels comprennent un connecteur femelle, et un connecteur mâle destiné à être emboîté avec le connecteur femelle pour établir une communication fluidique entre le connecteur mâle et le connecteur femelle.

Les connecteurs mâle et femelle comprennent classiquement chacun un corps fixe délimitant un conduit permettant l'écoulement d'un fluide et débouchant sur un orifice d'entrée/sortie, et un clapet obturateur mobile par rapport au corps fixe entre une position d'obturation dans laquelle le clapet mobile obture l'orifice d'entrée/sortie et une position de dégagement dans laquelle le clapet mobile permet l'écoulement d'un fluide à travers l'orifice d'entrée/sortie. Un ressort est traditionnellement utilisé pour rappeler chaque clapet en position d'obturation.

Un inconvénient des dispositifs de connexion existants est la difficulté de connecter les deux connecteurs, mâle et femelle, alors qu'un fluide est sous pression dans le conduit de l'un et/ou l'autre de ces deux connecteurs.

Un autre inconvénient est la présence dans les conduits des connecteurs d'éléments pouvant entraver, limiter l'écoulement du fluide une fois les deux connecteurs connectés. Cela peut provoquer une obstruction des conduits dans lequel le fluide circule quand ce fluide contient des éléments solides, ce qui est par exemple le cas d'eau partiellement glacée, utilisée notamment comme liquide de refroidissement.

De plus, les joints d'étanchéité utilisés dans ces dispositifs de connexion pour empêcher des fuites de fluide sont agencés dans le flux de fluide circulant entre les deux connecteurs. Cela peut gêner l'écoulement du fluide et, en cas de débit de fluide important, il existe un risque d'arrachement des joints d'étanchéité.

Un inconvénient supplémentaire est parfois, lors de la déconnexion, un blocage d'un ou des clapets en position de dégagement, le ressort ne suffisant pas à assurer le retour du ou des clapets en position d'obturation.

Il est connu du document de brevet US5483993 un coupleur comprenant une partie mâle et une partie femelle destinés à être connectées afin d'établir entre elles une communication fluidique pour des applications à gravité nulle ou faible. Cependant, ce coupleur présente une architecture complexe, ne permet pas un repositionnement sans faille des clapets à la déconnexion, et présente un risque de fuite en cas de fluide sous pression.

Aussi la présente invention vise à pallier tout ou partie de ces inconvénients en proposant un dispositif de connexion offrant la possibilité de réaliser une connexion sous pression, sans risque de fuite et sans limitation de débit du fluide.

A cet effet, la présente invention a pour objet un dispositif de connexion comprenant un premier connecteur et un deuxième connecteur, le premier connecteur et le deuxième connecteur comprenant un corps fixe, le corps fixe délimitant un conduit de circulation d'un fluide débouchant sur une ouverture de connexion, et un clapet mobile par rapport au corps fixe entre une position d'obturation, dans laquelle le clapet obture l'ouverture de connexion, et une position de dégagement, dans laquelle le clapet libère un passage à travers l'ouverture de connexion, dans lequel le dispositif de connexion comprend en outre des premiers moyens de verrouillage, configurés pour verrouiller le clapet mobile du premier connecteur au corps fixe du deuxième connecteur, et des deuxièmes moyens de verrouillage, configurés pour verrouiller le corps fixe du premier connecteur au clapet mobile du deuxième connecteur, dans lequel les premier et deuxième connecteurs comprennent des moyens de rappel pour rappeler chaque clapet en position d'obturation.

Ainsi, le dispositif de connexion selon l'invention permet une connexion du clapet mobile de chaque connecteur sur la partie fixe de l'autre connecteur.

Cette double connexion, parties mobiles sur parties fixes, évite une désolidarisation, une séparation entre les clapets et les corps fixes correspondants sous l'effet de la pression du fluide au moment de la connexion.

Ainsi, le dispositif selon l'invention permet une connexion sous pression.

Selon un mode de réalisation préféré, le dispositif de connexion comprend des moyens de blocage configurés pour maintenir verrouillés le clapet mobile du premier connecteur et la partie fixe du deuxième connecteur, ainsi que la partie fixe du premier connecteur et le clapet mobile du deuxième connecteur, tant que les clapets sont hors de leur position d'obturation.

Ainsi, pendant la déconnexion, les clapets sont tractés de la position de dégagement à la position d'obturation, par le corps fixe du connecteur auquel ces clapets sont respectivement maintenus verrouillés.

Cela permet de réaliser une déconnexion alors que du fluide sous pression circule encore entre les premier et deuxième connecteurs.

Cela permet également d'éviter un blocage des clapets en position de dégagement, par exemple à cause d'un grippage

Selon un mode de réalisation préféré, les clapets sont mobiles en translation par rapport aux corps fixes selon un axe de translation sensiblement perpendiculaire à une normale aux ouvertures de connexion.

La pression est donc perpendiculaire la direction de déplacement des clapets. Il n'y ainsi pas d'incidence de la pression du fluide sur l'ouverture ou la fermeture des clapets, ce qui permet une connexion sous pression et sans effort.

Selon un mode de réalisation préféré, au moins l'un des connecteurs parmi le premier connecteur et le deuxième connecteur comprend deux organes d'étanchéité destinés à empêcher une fuite de fluide entre le corps fixe et le clapet de ce connecteur quand le clapet est en position d'obturation, les deux organes d'étanchéité étant supportés par une même pièce de ce connecteur.

Ainsi, la pression s'exerce sur deux organes d'étanchéité appartenant à une même pièce, ce qui permet de réaliser une connexion sous pression.

Dans le cas contraire, la pression pourrait créer un écartement entre les organes d'étanchéité, et donc engendrer des fuites.

On notera que chacun des premier et deuxième connecteurs comporte préférentiellement ces deux organes d'étanchéité supportés par une même pièce de chacun des connecteurs.

Selon un mode de réalisation préféré, au moins l'un des connecteurs parmi le premier connecteur et le deuxième connecteur comprend deux organes d'étanchéité destinés à empêcher une fuite de fluide entre le corps fixe et le clapet de ce connecteur quand le clapet est en position d'obturation, les deux organes d'étanchéité étant agencés hors du conduit délimité par le corps fixe de ce connecteur.

Ainsi, les moyens d'étanchéité sont protégés; cela évite un arrachement des moyens d'étanchéité sous l'effet de la pression du fluide ou d'un débit élevé.

On notera que chacun des premier et deuxième connecteurs comporte préférentiellement ces deux organes d'étanchéité agencés hors du conduit délimité par le corps fixe de chacun des connecteurs.

Selon un mode de réalisation préféré, le conduit de circulation d'un fluide du premier et du deuxième connecteur délimite une section de passage libre.

Autrement dit, le conduit de circulation d'un fluide est dépourvu d'obstacle.

Ainsi, il n'y a pas de chute de pression entre le premier et le deuxième connecteur. En outre, cela évite un blocage des conduits quand le fluide circulant à travers les connecteurs contient des éléments solides, comme par exemple de l'eau contenant de la glace pilée.

Selon un mode de réalisation préféré, le dispositif de connexion comprend des moyens de régulation du débit de fluide destiné à circuler à travers les premier et deuxième connecteurs.

Selon un mode de réalisation préféré, le dispositif de connexion comprend des moyens de connexion automatique des premier et deuxième connecteurs.

Selon un mode de réalisation préféré, le dispositif de connexion comprend un système de verrouillage configuré pour verrouiller le premier connecteur et le deuxième connecteur une fois connectés, ce système de verrouillage étant distinct des premiers et deuxièmes moyens de verrouillage.

Ainsi, cette caractéristique permet de distinguer la fonction de maintien des premier et deuxième connecteurs dans un état connecté de celle de sécurisation des clapets sur les corps fixes. Il est ainsi possible d'utiliser un unique système de verrouillage alors que les premier et deuxième connecteurs comprennent chacun plusieurs conduits et clapets (multicoupleur). Il est aussi possible de faire varier une section de passage de fluide alors que les premier et deuxième connecteurs sont verrouillés dans un état connecté.

Ainsi, le retour des clapets en position d'obturation est automatique et ne nécessite ni action ni commande de la part d'un utilisateur autre que la déconnexion des premier et deuxième connecteurs.

Selon un autre aspect, l'invention concerne également un premier connecteur destiné à la mise en œuvre du dispositif de connexion ayant les caractéristiques précitées, le premier connecteur comprenant un corps fixe, un conduit de circulation d'un fluide délimité par le corps fixe, une ouverture de connexion sur laquelle débouche le conduit de circulation d'un fluide, et un clapet mobile par rapport au corps fixe entre une position d'obturation dans laquelle le clapet obture l'ouverture de connexion et une position de dégagement dans laquelle le clapet libère un passage à travers l'ouverture de connexion, dans lequel le clapet comprend un premier élément de verrouillage en vue de solidariser le clapet au corps fixe du deuxième connecteur du dispositif de connexion ayant les caractéristiques précitées, et dans lequel le corps fixe comprend un deuxième élément de verrouillage en vue de solidariser le corps fixe au clapet du deuxième connecteur.

Ce connecteur, qui permet une connexion sous pression, peut en outre comprendre tout ou partie des caractéristiques précédemment décrites du premier connecteur du dispositif de connexion selon l'invention.

Selon encore un autre aspect, l'invention concerne aussi un deuxième connecteur destiné à la mise en œuvre du dispositif de connexion ayant les caractéristiques précitées, le deuxième connecteur comprenant un corps fixe, un conduit de circulation d'un fluide délimité par le corps fixe, une ouverture de connexion sur laquelle débouche le conduit de circulation d'un fluide, et un clapet mobile par rapport au corps fixe entre une position d'obturation dans laquelle le clapet obture l'ouverture de connexion et une position de dégagement dans laquelle le clapet libère un passage à travers l'ouverture de connexion, dans lequel le corps fixe comprend un premier élément de verrouillage en vue de solidariser le corps fixe au clapet du premier connecteur du dispositif de connexion ayant les caractéristiques précitées, et dans lequel le clapet comprend un deuxième élément de verrouillage en vue de solidariser le clapet au corps fixe du premier connecteur.

Ce connecteur, qui permet une connexion sous pression, peut en outre comprendre tout ou partie des caractéristiques précédemment décrites du deuxième connecteur du dispositif de connexion selon l'invention.

Selon un autre aspect, l'invention a pour objet un procédé de connexion d'un premier connecteur et d'un deuxième connecteur d'un dispositif de connexion ayant les caractéristiques précitées, comprenant une première étape de verrouillage, permettant le verrouillage du clapet de chaque connecteur parmi les premier et deuxième connecteurs au corps fixe de l'autre connecteur desdits premier et deuxième connecteurs, puis une deuxième étape de verrouillage, distincte de la première étape de verrouillage, permettant le verrouillage du premier connecteur au deuxième connecteur.

Ce procédé offre ainsi d'abord un verrouillage des clapets sur le corps fixe de l'autre connecteur, puis un verrouillage direct des connecteurs entre eux, notamment d'un support du premier connecteur à un support du deuxième connecteur, en vue de maintenir les premier et deuxième connecteurs dans un état connecté. Ce séquençage permet d'éviter que les clapets soient déplacés de manière incontrôlée sous l'effet de la pression du fluide.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en coupe et de côté d'un dispositif de connexion selon un mode de réalisation de l'invention, le premier et le deuxième connecteur étant déconnectés, distants l'un de l'autre,
- La figure 2 est une vue en coupe et de côté d'un dispositif de connexion selon un mode de réalisation de l'invention, dans laquelle le premier connecteur et le deuxième connecteur sont en appui l'un contre l'autre, mais déconnectés,
- Les figures 3 à 6 sont des vues en coupe et de côté d'un dispositif de connexion selon un mode de réalisation de l'invention, illustrant différents étapes de connexion du premier connecteur et du deuxième connecteur,
- La figure 7 est une vue en coupe et de côté d'un dispositif de connexion selon un mode de réalisation de l'invention, le premier connecteur et le deuxième connecteur étant verrouillés,
- La figure 8 est une vue en coupe et de côté d'un dispositif de connexion selon un mode de réalisation de l'invention,
- Les figures 9 et 10 sont des vues en perspective d'un dispositif de connexion selon un mode de réalisation de l'invention, respectivement dans un état déconnecté et connecté.

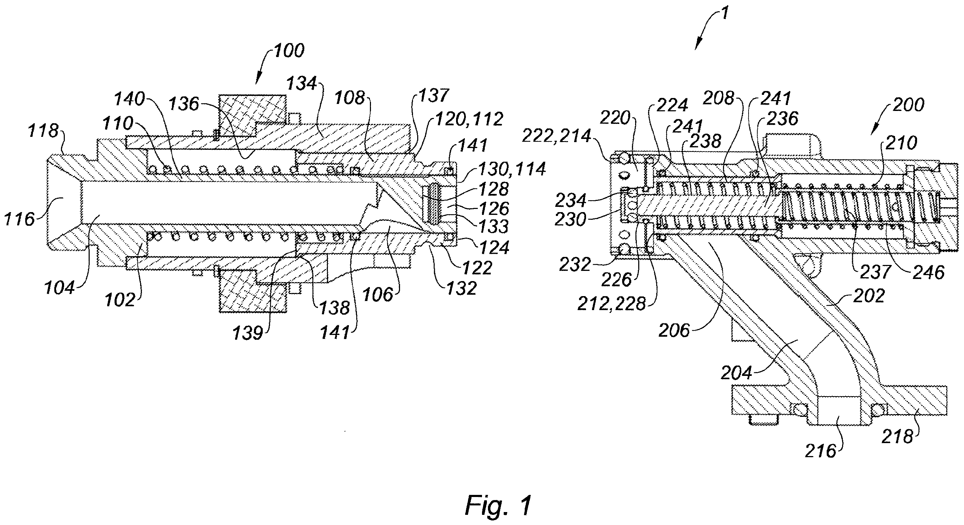

La figure 1 montre un dispositif 1 de connexion selon un mode de réalisation de l'invention. Le dispositif 1 de connexion comprend un premier connecteur 100, par exemple un connecteur femelle, et un deuxième connecteur 200, par exemple un connecteur mâle. Le dispositif 1 de connexion est destiné à établir une communication fluidique entre deux dispositifs extérieurs (non représentés), par connexion du premier connecteur 100, relié à l'un des deux dispositifs extérieurs, et du deuxième connecteur 200, relié à l'autre des deux dispositifs extérieurs.

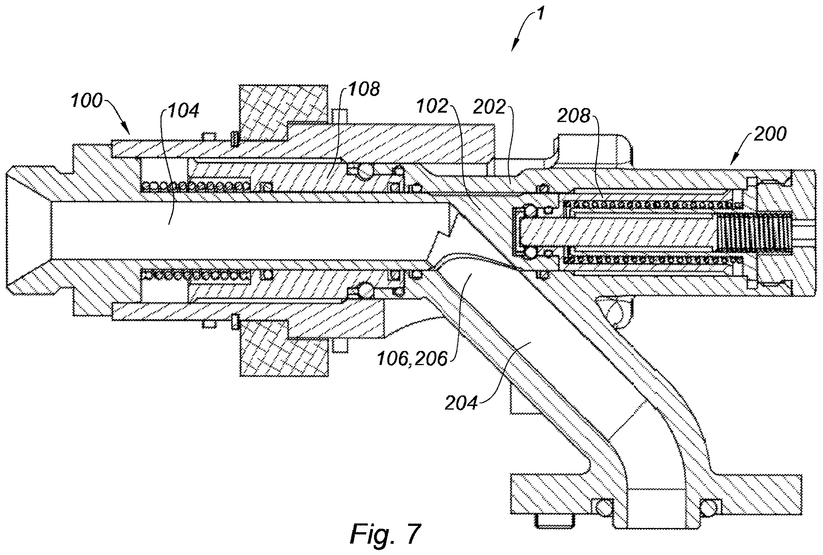

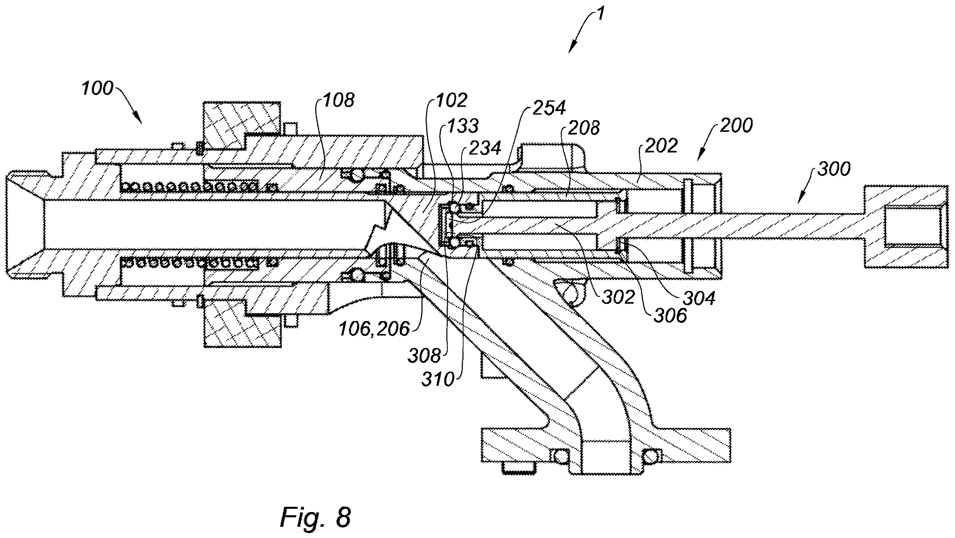

Le premier et le deuxième connecteurs 100, 200 comprennent un corps fixe 102, 202, un conduit 104, 204 de circulation d'un fluide délimité par le corps fixe 102, 202, une ouverture 106, 206 de connexion sur laquelle débouche le conduit 104, 204, et un clapet 108, 208 mobile, notamment en translation, par rapport au corps fixe 102, 202, entre une position d'obturation (visible par exemple sur les figures 1 et 8) dans laquelle le clapet 108, 208 obture l'ouverture 106, 206 de connexion, et une position de dégagement (figure 7) dans laquelle le clapet 108, 208 libère un passage à travers l'ouverture 106, 206 de connexion pour permettre l'écoulement d'un fluide entre les deux connecteurs 100, 200 via les ouvertures 106, 206 de connexion et les conduits 104, 204.

Les premier et deuxième connecteurs 100, 200 comprennent des moyens de rappel, et de préférence uniquement des moyens de rappel, comme un ressort 110, 210, pour rappeler le clapet 108, 208 en position d'obturation. Ainsi, le retour des clapets 108, 208 en position d'obturation est automatique. Le ressort 110 s'étend avantageusement autour de la partie du corps fixe 102 délimitant le conduit 104.

On notera que le conduit 104, 204 délimité par le corps fixe 102, 202 de chacun des premier et deuxième connecteurs 100, 200 est dégagé, libre, dépourvu d'obstacle pouvant entraver la circulation du fluide, en particulier si ce fluide comprend des éléments solides, par exemple de l'eau mélangée à de la glace pilée servant de liquide de refroidissement. On constate en particulier que la section de passage du fluide à l'intérieur des conduits 104, 204 est sensiblement constante, c'est-à-dire que la section transverse au conduit 104, 204 a une aire sensiblement constante.

L'ouverture 106, 206 de connexion s'étend ici à une extrémité du conduit 104, 204, l'autre extrémité débouchant ici sur une ouverture 116, 216 de raccord destinée à communiquer avec le dispositif extérieur et ménagée à cet effet au niveau d'une portion 118, 218 de raccord permettant de connecter les connecteurs 100, 200 aux dispositifs extérieurs à coupler.

On notera que les premier et deuxième connecteurs 100, 200 sont avantageusement configurés pour s'emboîter afin d'être connectés. Cet emboîtement est destiné à provoquer le déplacement des clapets 108, 208 de la position d'obturation à la position de dégagement, et à faire coïncider les ouvertures 106, 206, c'est-à-dire les placer sensiblement en regard l'une de l'autre afin de permettre la circulation d'un fluide entre les connecteurs 100, 200, à travers les conduits 104, 204 et les ouvertures 106, 206.

Plus particulièrement, le corps fixe 202 du deuxième connecteur 200 est destiné à repousser le clapet 108 du premier connecteur 100 jusqu'à la position de dégagement pendant la connexion du premier connecteur 100 et du deuxième connecteur 200. De même, le corps fixe 102 du premier connecteur 100 est destiné à repousser le clapet 208 du deuxième connecteur 200 jusqu'à la position de dégagement pendant cette connexion.

Comme illustré par exemple sur la figure 1, le clapet 108 du premier connecteur comprend ainsi une face 112 de butée, et le corps fixe 202 du deuxième connecteur 200 comprend une face 214 d'appui destinée à venir en appui contre la face 112 de butée au cours de la connexion, afin de provoquer le déplacement du clapet 108 de la position d'obturation à la position de dégagement.

De façon similaire, le clapet 208 du deuxième connecteur comprend une face 212 de butée, et le corps fixe 102 du premier connecteur 100 comprend une face 114 d'appui destinée à venir en appui contre la face 212 de butée au cours de la connexion, afin de provoquer le déplacement du clapet 208 de la position d'obturation à la position de dégagement.

Plus précisément, selon l'exemple de la figure 1, le clapet 108 du premier connecteur 100 peut être une bague, sensiblement cylindrique, présentant un épaulement 120 à partir duquel s'étend une portion 122 de tenon présentant une paroi 124 d'extrémité et destinée à venir s'emboîter dans un logement 220 ménagé à une extrémité du corps fixe 202 du deuxième connecteur 200, ce logement 220 présentant un bord 222 supérieur délimitant une ouverture et un épaulement 224 formant le fond du logement 220. L'épaulement 120 et le bord 222 supérieur sont destinés à venir en appui l'un contre l'autre lors de la connexion des connecteurs 100, 200. Alternativement ou en complément, la paroi 124 d'extrémité et le fond 224 peuvent également venir en appui l'une contre l'autre pendant la connexion des connecteurs 100, 200. Ainsi, la face 112 de butée est par exemple délimitée par l'épaulement 120 et la face 214 d'appui par le bord 222 supérieur.

Le corps fixe 102 du premier connecteur 100 peut présenter une forme sensiblement cylindrique et présenter, notamment à une extrémité, un logement 126 adapté pour recevoir une portion 226 de tenon située à une extrémité du clapet 208, s'étendant à partir d'un épaulement 228 du clapet 208 et ayant une paroi 230 d'extrémité. Le logement 126 présente un fond 128 et un bord supérieur 130 délimitant une ouverture. La paroi 230 d'extrémité et le fond 128 sont destinés à venir en appui quand le premier connecteur 100 et le deuxième connecteur 200 sont emboîtés. Alternativement ou en complément, l'épaulement 228 et le bord supérieur 130 peuvent être destinés à venir en appui quand les connecteurs 100, 200 sont connectés. Ainsi, la face 212 de butée peut être délimitée par exemple par l'épaulement 228 et la face 114 d'appui par le bord 130 supérieur.

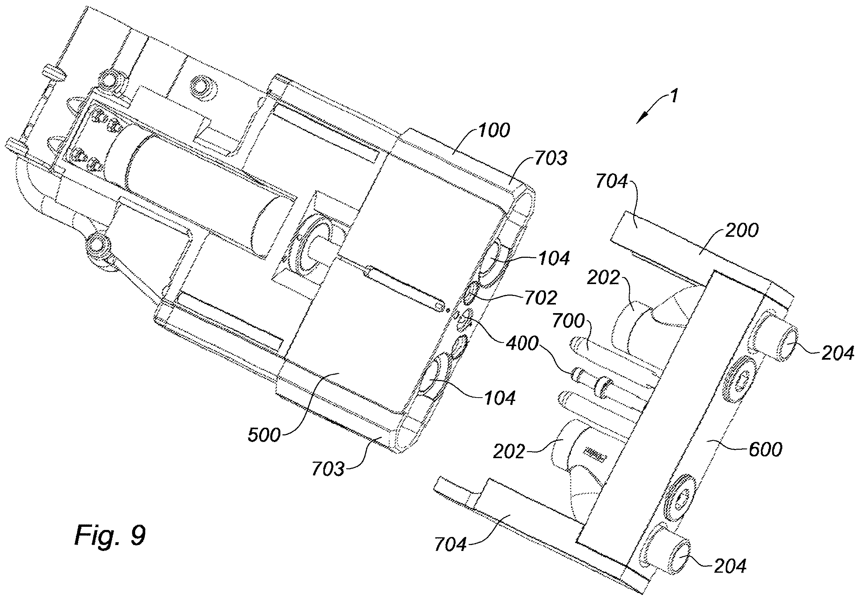

Le dispositif 1 de connexion peut comprendre un système de verrouillage 400, visible sur la figure 9, permettant de verrouiller le premier connecteur 100 au deuxième connecteur 200 une fois que l'emboîtement de ces connecteurs 100, 200 est achevé, c'est-à-dire une fois que les ouvertures 106, 206 de connexion se superposent. Ce système de verrouillage 400 est distinct et indépendant du verrouillage des clapets 108, 208 sur les corps fixes 202, 102, c'est-à-dire distinct des premiers et deuxièmes moyens de verrouillage décrits plus en détail ci-après. En effet, les premiers et deuxièmes moyens de verrouillage ne permettent pas de verrouiller, sécuriser la connexion des premier et deuxièmes connecteurs 100, 200. Le système 400 de verrouillage assure donc le maintien en place des connecteurs 100, 200 une fois connectés. On notera que le système 400 de verrouillage peut être configuré pour s'enclencher après le verrouillage des clapets 108, 208 sur les corps fixes 202, 102 quand le premier et le deuxième connecteurs 100, 200 sont connectés l'un à l'autre. Le système de verrouillage 400 est par exemple de type à billes, filetage, came, baïonnette, goupille, ou encore de type magnétique ou électromagnétique.

Le dispositif 1 de connexion peut par ailleurs comprendre des moyens d'indexation, permettant un positionnement relatif correct des premier et deuxième connecteurs 100, 200 l'un par rapport à l'autre avant connexion, comme par exemple une tige 700 et une ouverture 702 correspondante et/ou des portions 703, 704 d'emboîtement. Ces moyens d'indexation sont avantageusement extérieurs aux corps fixes 102, 202 et aux clapets 108, 208 des premier et deuxième connecteurs 100, 200, c'est-à-dire n'en font pas partie.

Le dispositif 1 de connexion comprend par ailleurs des premiers moyens de verrouillage configurés pour verrouiller le clapet 108 du premier connecteur 100 sur le corps fixe 202 du deuxième connecteur 200 au cours de l'emboîtement du premier connecteur 100 et du deuxième connecteur 200, et des deuxièmes moyens de verrouillage configurés pour verrouiller le corps fixe 102 du premier connecteur 100 sur le clapet 208 du deuxième connecteur 200 au cours de l'emboîtement du premier connecteur 100 et du deuxième connecteur 200.

En particulier, les premiers moyens de verrouillage et les deuxièmes moyens de verrouillage sont respectivement destinés à solidariser en translation le clapet 108 avec le corps fixe 202, et le clapet 208 avec le corps fixe 102.

Comme visible sur la figure 1, les premiers moyens de verrouillage comprennent par exemple une gorge 132 et un ou plusieurs organes 232 de verrouillage mobiles radialement par rapport à l'axe de translation des clapets 108, 208 et destinés à engager la gorge 132. La gorge 132 est ici ménagée sur une paroi latérale extérieure de la portion 122 de tenon du clapet 108, et les organes 232 de verrouillage sont par exemples de billes, mobiles dans un alésage radial ménagé à travers une paroi latérale du logement 220.

Les deuxièmes moyens de verrouillage peuvent quant à eux comprendre une gorge 133 et un ou plusieurs organes 234 de verrouillage, par exemple des billes, mobiles radialement par rapport à l'axe de translation des clapets 108, 208 et destinés à engager la gorge 133. La gorge 133 est ici ménagée sur une paroi latérale délimitant le logement 126, et les organes 234 de verrouillage sont mobiles dans un alésage radial ménagé à travers une paroi latérale de la portion 226 de tenon.

Il convient de noter que le dispositif 1 de connexion est avantageusement dépourvu de moyens de verrouillage des clapets 108, 208 dans leur position d'obturation. En d'autres termes, les clapets 108, 208 sont laissés libres en position d'obturation : ces clapets ne sont pas bloqués dans la position d'obturation. Les clapets 108, 208 peuvent y être simplement rappelés par les moyens de rappel correspondant ici aux ressorts 110, 210. En effet, les pressions s'équilibrent au niveau des clapets 108, 208, du fait de leur agencement et de celui des organes d'étanchéité141, 241 supportés par une même pièce. Il n'y a donc pas besoin de recourir à un verrouillage des clapets 108, 208 en position d'obturation.

En outre, le dispositif 1 de connexion peut avantageusement comprendre des moyens de blocage configurés pour maintenir verrouillés le clapet 108 au corps fixe 202 et le corps 102 fixe au clapet 208 aussi longtemps que les clapets 108, 208 sont hors de leur position d'obturation, c'est-à-dire pendant la connexion et la déconnexion des connecteurs 100, 200.

Les moyens de blocage comprennent ici un manchon 134, de préférence solidaire du corps fixe 102, ayant une paroi 136 intérieure. Ce manchon 134 s'étend autour du conduit 104 délimité par le corps fixe 102, et délimite avec le corps fixe 102 un espace à l'intérieur duquel est destiné à se déplacer le clapet 108 entre la position d'obturation et la position de dégagement.

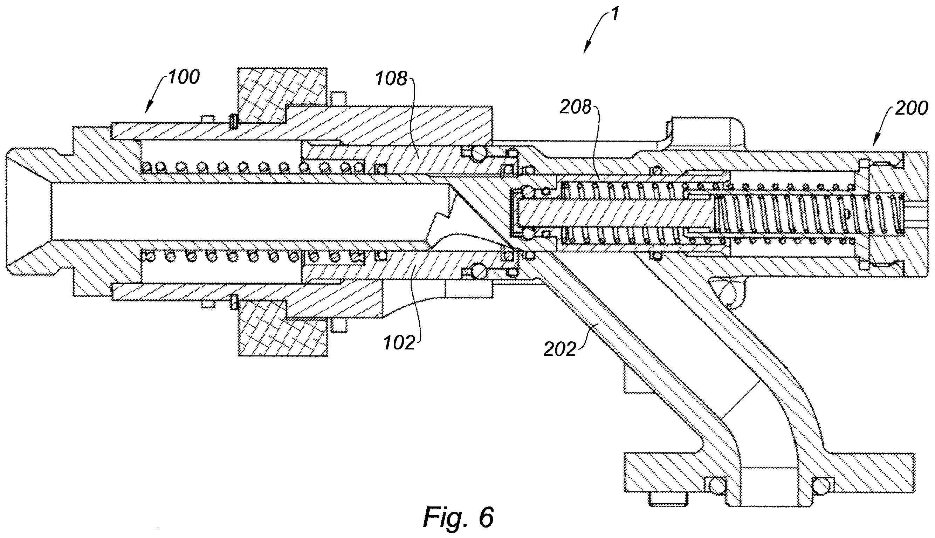

La paroi 136 intérieure est destinée à maintenir le ou les organes 232 de verrouillage à l'intérieur de la gorge 132 au cours du déplacement du clapet 108 entre la position d'obturation et la position de dégagement, comme cela est visible par exemple sur la figure 6.

Le clapet 108 est en effet mobile entre une paroi latérale 140 du corps fixe 102 et la paroi intérieure 136 du manchon 134, et guidé par celles-ci.

Pour faciliter l'engagement des organes 232 de verrouillage dans la gorge 132, la paroi 136 intérieure peut avoir une forme évasée à l'extrémité du manchon 136. En particulier, le manchon 136 peut présenter une extrémité ayant un chanfrein 137.

Par ailleurs, la paroi 136 intérieure peut présenter un épaulement 138 contre lequel est destiné à venir en appui une saillie radiale 139 du clapet 108, afin de stopper le clapet 108 en position d'obturation.

En ce qui concerne le deuxième connecteur 200, les moyens de blocage peuvent comprendre un organe 236 de poussée, mobile par rapport au clapet 208, entre une position de blocage (figure 7 par exemple) dans laquelle l'organe 236 de poussée permet de maintenir les organes 234 de verrouillage en saillie depuis une face latérale extérieure de la portion 226 de tenon et donc à l'intérieur de la gorge 133, et une position de déblocage (figure 1) dans laquelle l'organe 236 de poussée permet un déplacement des organes 234 de verrouillage radialement vers l'intérieur de la portion de tenon 226 et donc hors de la gorge 133.

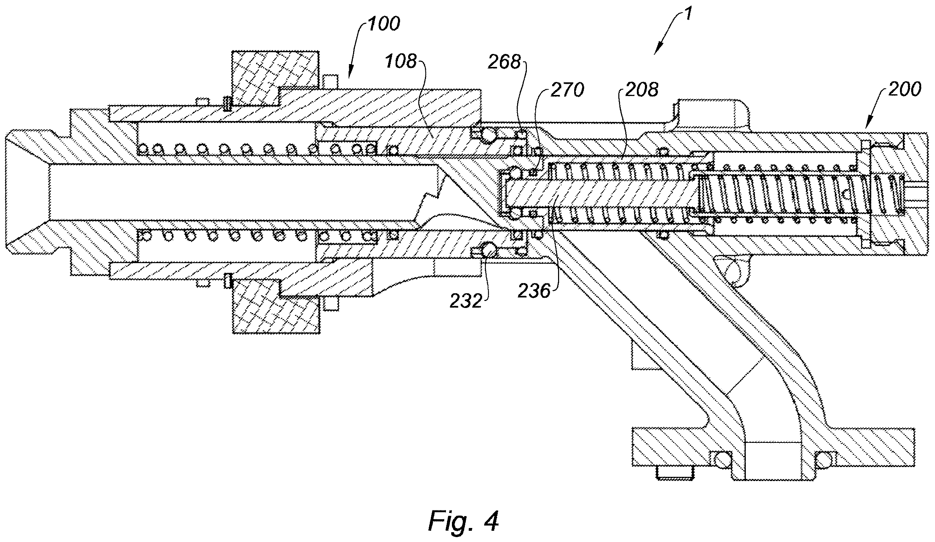

L'organe 236 de poussée est par exemple une tige sensiblement cylindrique. L'organe 236 de poussée présente une paroi 238 latérale extérieure destinée à venir en appui contre les organes 234 de verrouillage pour les maintenir dans la gorge 133, comme cela est visible sur les figures 4 à 7.

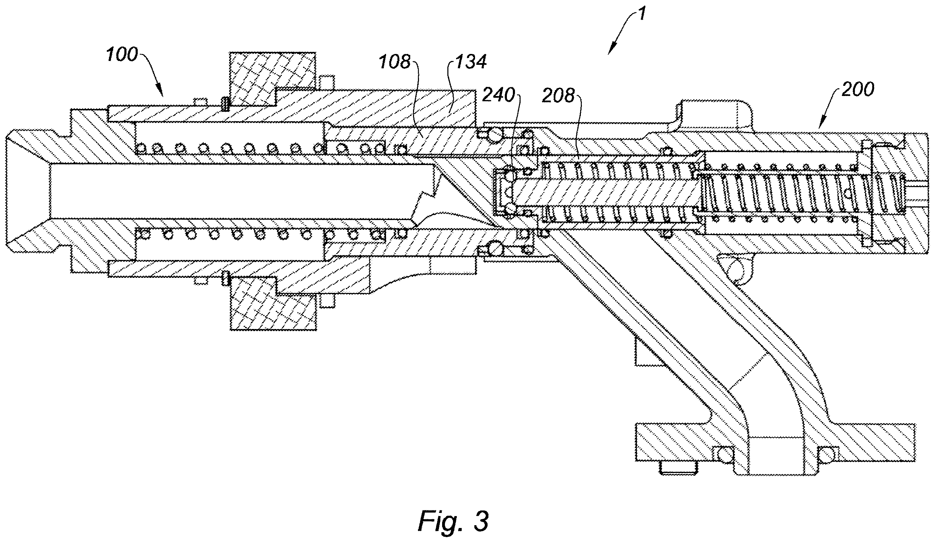

Pour faciliter l'engagement des organes 234 de verrouillage dans la gorge 133, l'extrémité de l'organe 236 de poussée peut présenter une section transverse rétrécie, et par exemple un chanfrein 240 (figure 3).

L'organe 236 de poussée est ici mobile en translation selon un axe parallèle ou confondu avec l'axe de translation du clapet 208 par rapport au corps fixe 202.

Plus précisément, le clapet 208 a une forme creuse et l'organe 236 de poussée est mobile à l'intérieur du clapet 208.

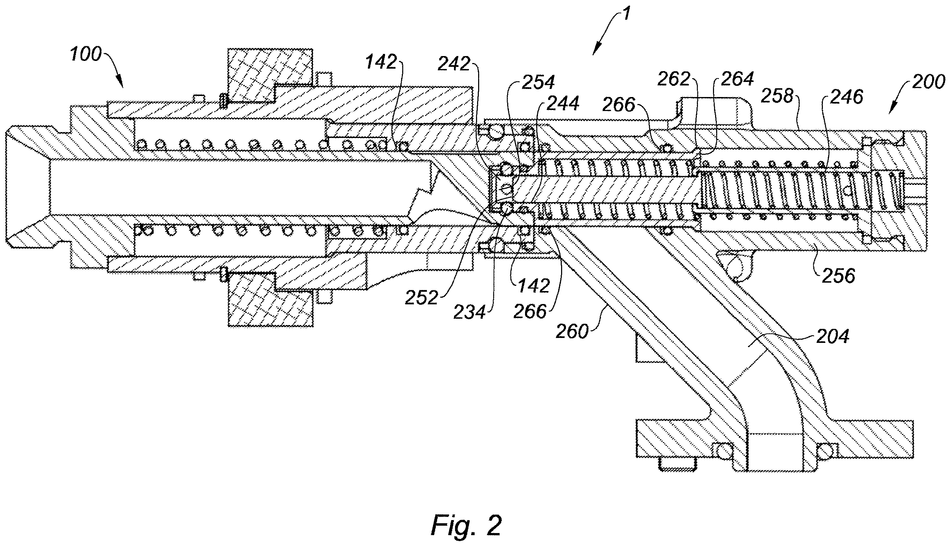

La portion 226 de tenon délimite un logement intérieur 242 (figure 2), sur lequel débouche une extrémité du ou des alésages radiaux à l'intérieur desquels sont disposés les organes 234 de verrouillage. L'organe 236 de poussée est mobile entre les positions de blocage et déblocage à l'intérieur de ce logement intérieur 242, dont une paroi latérale 244, en appui contre la paroi latérale extérieure 238 peut servir de guidage.

L'organe 236 est par ailleurs mobile en translation par rapport à un manchon 246, sensiblement cylindrique, solidaire du corps fixe 202 et s'étendant parallèlement à l'axe de translation du clapet 208, entre une position déployée (figure 1) dans laquelle l'organe 236 de poussée s'étend ici au maximum hors du manchon 246, et une position rétractée (figure 7) dans laquelle l'organe 236 de poussée s'étend au maximum à l'intérieur du manchon 246. Le manchon 246 sert de guidage en translation de l'organe 236 de poussée.

Le ressort 210 s'étend avantageusement autour du manchon 246, de l'organe de poussée 236, et notamment à l'intérieur du clapet 208.

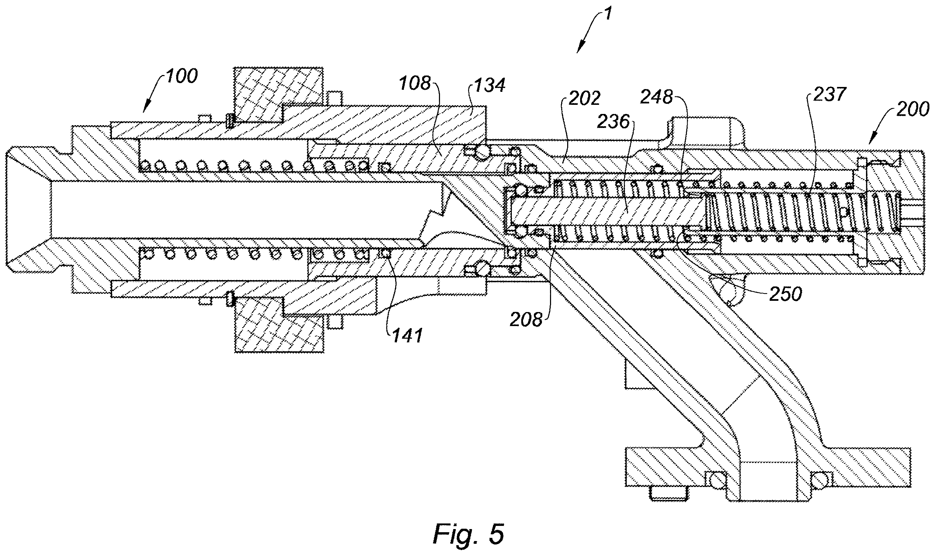

L'organe 236 peut présenter un épaulement 248 (figure 5), ici ménagé à une extrémité de l'organe 236 de poussée opposée à celle engagée dans le logement intérieur 242, destiné à venir en appui contre un rebord 250, ici disposé à une extrémité du manchon 246, quand l'organe 236 de poussée est en position déployée. Le rebord 250 délimite ici une ouverture de passage permettant à l'organe 236 de poussée de s'étendre à travers le manchon 246.

Des moyens de rappel, comme un ressort 237 s'étendant notamment dans le manchon 246, peuvent être prévus pour rappeler l'organe 236 de poussée en position déployée.

L'extrémité de l'organe 136 de poussée, engagée dans le logement intérieur 242, peut présenter une face 252 de butée (figure 2) contre laquelle est destiné à venir en appui un fond 254 du logement intérieur 242 quand le clapet 208 est déplacé de la position d'obturation vers la position de dégagement. Ainsi, par appui du fond 254 contre la face 252 de butée, le clapet 208, en étant déplacé de la position d'obturation à la position de dégagement, déplace l'organe 236 de poussée de la position déployée vers la position rétractée.

De manière avantageuse, on notera que les ouvertures 106, 206 de connexion s'étendent parallèlement à l'axe de translation des clapets 108, 208. En d'autres termes, une normale aux ouvertures 106, 206 de connexion est sensiblement perpendiculaire à l'axe de translation des clapets 108, 208.

L'ouverture 106 de connexion du premier connecteur 100 est ménagée à travers la paroi latérale 140 du corps fixe 102 sensiblement cylindrique.

L'ouverture 206 de connexion du deuxième connecteur 200 est ménagée à travers une paroi latérale 256 (figure 2) d'une portion 258 de guidage du corps fixe 202. Le clapet 208 est destiné à coulisser à l'intérieur de cette portion 258 de guidage. La portion 258 de guidage est sensiblement cylindrique et le clapet 208 est un bouchon mobile à l'intérieur de cette portion cylindrique.

Par ailleurs, l'ouverture 206 de connexion est agencée ici à l'extrémité d'une portion 260 de circulation d'un fluide du corps fixe 202. La portion 260 de circulation d'un fluide délimite le conduit 204. L'ouverture 206 de connexion est à l'intersection de la portion 258 de guidage et de la portion 260 de circulation.

On notera que la paroi latérale 256 présente, sur une face intérieure, un épaulement 262 contre lequel une saillie 264 radiale du clapet 208 est destinée à venir en appui pour arrêter le clapet 208 en position d'obturation.

Le dispositif 1 de connexion comprend des premiers moyens d'étanchéité configurés pour empêcher une fuite de fluide entre le corps fixe 102 et le clapet 108, et entre le corps fixe 202 et le clapet 208, à travers les ouvertures 106, 206 de connexion, quand les clapets 108, 208 sont en position d'obturation.

Les premiers moyens d'étanchéité comprennent ici, pour chacun des connecteurs 100, 200, une paire d'organes 141, 241 d'étanchéité, par exemple des joints d'étanchéité toriques, disposés de part et d'autre de l'ouverture 106, 206 de connexion quand le clapet 108, 208 est en position d'obturation.

Chaque paire d'organes 141, 241 d'étanchéité est avantageusement supportée par une seule et même pièce du premier connecteur 100 ou du deuxième connecteur 200. Cette pièce peut être par exemple le clapet 108, 208 ou le corps fixe 102, 202.

Selon une possibilité avantageuse, la paire d'organes 141, 241 d'étanchéité de l'un des connecteurs 100, 200 est supportée par le clapet 108, 208 de ce connecteur 100, 200, tandis que la paire d'organes 141, 241 d'étanchéité de l'autre connecteur 100, 200 est supportée par le corps fixe 102, 202 de cet autre connecteur 100, 200. Ainsi, les organes 141, 241 d'étanchéité supportés par le corps fixe 102, 202 sont immobiles par rapport à l'ouverture 106, 206 de connexion de ce corps fixe 102, 202 et assurent également l'étanchéité de la connexion une fois les premier et deuxième connecteurs 100, 200 connectés.

En l'occurrence, la paire d'organes 141 d'étanchéité du premier connecteur 100 est supportée par le clapet 108, alors que la paire d'organes 241 d'étanchéité est supportée par le corps fixe 202.

Le clapet 108 présente, sur une face intérieure, deux gorges 142, chaque gorge 142 recevant l'un des organes 141 d'étanchéité (figure 2).

Le corps fixe 202 présente, sur une face intérieure de la paroi latérale 256, deux gorges 266, chaque gorge 266 recevant l'un des deux organes 241 d'étanchéité.

On remarquera que les paires d'organes 141, 241 d'étanchéité sont agencées hors des conduits 104, 204, hors de la section de passage du fluide délimitée par les conduits 104, 204, et ne sont donc pas exposées au flux de fluide circulant à travers ces conduits 104, 204.

En d'autres termes, les gorges 142, 266 ne débouchent pas directement sur les conduits 104, 204; les gorges 142, 266 débouchent, en position d'obturation comme en position de dégagement des clapets 108, 208, sur un élément d'interposition, qui peut être la paroi latérale 140 du corps fixe 102 pour la paire d'organes 141 d'étanchéité, et une paroi latérale du clapet 208 ou la paroi latérale 140 du corps fixe 102 pour la paire d'organes 241 d'étanchéité.

Ainsi, les organes 141, 241 n'entravent pas le flux de fluide à travers les connecteurs 100, 200. De plus, cela prévient tout risque d'arrachement et ce faisant perte d'étanchéité en cas de débit de fluide élevé.

On notera que les paires d'organes 141, 241 d'étanchéité s'étendent autour de l'axe de translation des clapets 108, 208 respectifs, de préférence dans un plan sensiblement perpendiculaire à cet axe de translation.

Le dispositif 1 de connexion comprend également des deuxièmes moyens d'étanchéité configurés pour empêcher une fuite de fluide entre le corps fixe 102 et le clapet 208, et entre le corps fixe 202 et le clapet 108 quand les corps fixes 102, 202 sont verrouillés respectivement aux clapets 208, 108 pendant l'opération de connexion ou déconnexion.

Les deuxièmes moyens d'étanchéité évitent des fuites de fluide à l'interface clapet 108 / corps fixe 202 et clapet 208 / corps fixe 102. Au cours de la translation des clapets 108, 208 vers la position de dégagement (connexion) ou d'obturation (déconnexion), ces interfaces passent en regard des ouvertures 106, 206 de connexion et sont donc exposées au fluide présent dans les conduits 104, 204.

Les deuxièmes moyens d'étanchéité comprennent notamment (figure 4) un premier organe 268 d'étanchéité destiné à prévenir une fuite de fluide entre le clapet 108 et le corps fixe 202, et un deuxième organe 270 d'étanchéité destiné à prévenir une fuite de fluide entre le clapet 208 et le corps fixe 102. Les premier et deuxième organes 268, 270 d'étanchéité sont par exemple des joints d'étanchéité toriques.

Selon l'exemple des figures 1 à 7, le premier organe 268 d'étanchéité est placé à l'intérieur d'une gorge ménagée sur une paroi latérale du logement 220, et le deuxième organe 270 d'étanchéité est placé à l'intérieur d'une gorge ménagée sur une face extérieure de la paroi latérale de la portion 226 de tenon.

Le premier organe 268 d'étanchéité et le deuxième organe 270 d'étanchéité s'étendent hors des conduits 104, 204.

Le premier organe 268 d'étanchéité et le deuxième organe 270 d'étanchéité s'étendent dans un plan sensiblement perpendiculaire à l'axe de translation des clapets 108, 208.

Les différentes étapes d'un procédé de connexion du premier connecteur 100 et du deuxième connecteur 200 sont décrites plus en détail ci-après, partant d'une situation initiale (figure 1), dans laquelle le premier connecteur 100 et le deuxième connecteur 200 sont déconnectés.

Les premier et deuxième connecteurs 100, 200 sont indexés, positionnés correctement l'un par rapport à l'autre par le biais des moyens d'indexation, puis mis en contact (figure 2). Les faces d'appui 114, 214 et les faces de butée 112, 212 sont mises en contact. Selon l'exemple de la figure 2, la portion de tenon 122 est insérée dans le logement 220, la portion de tenon 226 est insérée dans le logement 126, l'épaulement 120 est en appui contre le bord supérieur 222, la paroi d'extrémité 124 est en appui contre l'épaulement 224, le bord supérieur 130 est en appui contre l'épaulement 228.

Les organes 232, 234 de verrouillage peuvent être engagés dans les gorges 132, 133 correspondantes, sans toutefois y être bloqués.

L'utilisateur pousse ensuite le premier connecteur 100 et le deuxième connecteur 200 l'un contre l'autre. Le corps fixe 202 du deuxième connecteur appuie et déplace le clapet 108 du premier connecteur de la position d'obturation vers la position de dégagement, contre l'action du ressort 110, tandis que le corps fixe 102 du premier connecteur 100 appuie et déplace le clapet 208 de la position d'obturation vers la position de dégagement contre l'action du ressort 210 (figures 3 à 7).

Au cours du déplacement du clapet 208 vers la position de dégagement, l'organe de poussée 236 pénètre dans le logement intérieur 242, et le chanfrein 240 pousse le cas échéant les organes 234 de verrouillage à l'intérieur de la gorge 133 (figure 3).

La paroi latérale extérieure 238 vient au contact des organes 234 de verrouillage et les bloque dans la gorge 133 : le clapet 208 est verrouillé au corps fixe 102 (figure 4).

Le chanfrein 137 déplace le cas échéant les organes 232 de verrouillage à l'intérieur de la gorge 132 (figure 5). Par ailleurs, en appuyant contre la face de butée 252, le fond 254 repousse et déplace l'organe 236 de poussée de la position déployée vers la position rétractée. L'organe 236 reste cependant en position de blocage, à l'intérieur du logement intérieur 242, sous l'action du ressort 237.

La paroi intérieure 136 du manchon 134 appuie ensuite contre les organes 132 de verrouillage et les maintient engagés dans la gorge 132 : le clapet 108 est alors verrouillé au corps fixe 202 (figure 6).

L'utilisateur continue de déplacer le premier connecteur 100 et le deuxième connecteur 200 l'un contre l'autre, jusqu'à ce que les ouvertures 106, 206 de connexion se superposent (figure 7). Le dispositif 1 de connexion peut comprendre à cet effet une butée (non représentée) pour arrêter l'emboîtement du premier connecteur 100 et du deuxième connecteur 200 quand les ouvertures 106, 206 de connexion sont en regard. Les premier et deuxième connecteurs 100, 200 peuvent en outre être maintenus dans cet état connecté par le système de verrouillage 400.

Le procédé prévoit que l'étape de verrouillage des clapets 108, 208 respectivement sur les corps fixes 202, 102 intervienne avant l'étape de verrouillage des premier et deuxième connecteurs 100, 200 directement l'un à l'autre par l'intermédiaire du système de verrouillage 400, de manière à éviter qu'au cours de la connexion, le fluide sous pression déplace les clapets 108, 208 de manière incontrôlée.

Au cours de la déconnexion, le verrouillage du clapet 108 au corps fixe 202 et du clapet 208 au corps fixe 102 garantit le retour des clapets 108, 208 jusqu'à la position d'obturation, ces clapets 108, 208 étant tractés par la partie fixe 102, 202 à laquelle ils sont verrouillés.

Comme illustré sur la figure 8, le dispositif 1 de connexion comprend avantageusement des moyens de régulation du débit de fluide destiné à circuler à travers les premier et deuxième connecteurs 100, 200.

Les moyens de régulation du débit de fluide peuvent comprendre au moins un organe 300 d'entraînement, par exemple un vérin, configuré pour modifier la position relative de l'un des clapets 108, 208 par rapport aux ouvertures 106, 206 de connexion.

Ainsi, l'organe 300 d'entraînement permet de faire adopter à l'un des clapets 108, 208 une position intermédiaire (figure 8), comprise entre la position d'obturation et la position de dégagement, dans laquelle ce clapet 108, 208 s'étend en partie en travers les ouvertures 106, 206 de connexion, ce qui a pour effet de réduire la section de passage du fluide à travers les ouvertures 106, 206 de connexion par rapport à la position de dégagement.

L'organe 300 d'entraînement peut être configuré pour déplacer directement le premier et le deuxième connecteur 100, 200 l'un par rapport à l'autre, c'est-à-dire faire varier la distance entre les premier et deuxième connecteurs 100, 200, en les rapprochant l'un de l'autre ou en les éloignant. Le fait de faire varier la distance entre le premier et le deuxième connecteur 100, 200 permet en effet de modifier la position des clapets 108, 208 par rapport à les ouvertures 106, 206 de connexion, et donc de faire varier le débit de fluide transitant par les ouvertures 106, 206 de connexion. Cette solution permet avantageusement d'utiliser un seul organe 300 d'entraînement pour des premier et deuxième connecteurs 100, 200 comprenant une pluralité de corps fixes 102, 202, conduits 104, 204, clapets 108, 208, ouvertures de connexion 106, 206, etc.

Comme visible sur la figure 8, l'organe 300 d'entraînement peut être alternativement configuré pour déplacer directement l'un des deux clapets 108, 208 entre les positions d'obturation, intermédiaire et de dégagement, de préférence celui des clapets 108, 208 qui s'étend à l'intérieur du corps fixe 102, 202 correspondant, comme ici le clapet 208, car l'accès est plus facile. Cela permet avantageusement de piloter chaque clapet 208 indépendamment des autres clapets que peut comporter le premier ou deuxième connecteur 100, 200.

L'organe 300 d'entraînement est ici un vérin comprenant une tige 302 s'étendant dans le corps fixe 202 et dans le clapet 208. La tige du vérin fait ici office d'organe 236 de poussée. En outre, la tige du vérin comprend une face de poussée permettant de rappeler le clapet 208 dans la position d'obturation.

Les moyens de régulation de débit peuvent en outre comprendre un capteur (non représenté) destiné à mesurer un paramètre du fluide circulant dans l'un ou les conduits 104, 204, et une unité de commande (non représentée) destinée à commander une modification du débit de fluide en fonction de la valeur du paramètre mesuré. Cela permet de réaliser un asservissement du débit de fluide. L'unité de commande peut être configurée pour commander l'organe 300 d'entraînement.

Par exemple, pour un fluide du type fluide de refroidissement, le capteur peut être une sonde de température destinée à mesurer la température du fluide circulant dans l'un ou les conduits 104, 204. Si la température mesurée est inférieure à une température de consigne prédéterminée, alors l'unité de commande peut commander une réduction du débit de fluide passant à travers les ouvertures 106, 206 de connexion, afin de réduire la consommation. Cela permet de maintenir un refroidissement efficace avec une consommation réduite.

On notera que le dispositif 1 de connexion peut avantageusement comprendre des moyens de connexion automatique des premier et deuxième connecteurs 100, 200. Les moyens de connexion automatique sont configurés pour rapprocher automatiquement les premier et deuxième connecteurs 100, 200 afin de réaliser la connexion une fois que cette connexion a été amorcée manuellement par un opérateur. Ces moyens de connexion peuvent comprendre un organe d'entraînement qui est l'organe 300 d'entraînement permettant de modifier la position relative de l'un des clapets 108, 208 vis-à-vis des ouvertures 106, 206 de connexion.

Ainsi, toujours selon l'exemple de la figure 8, l'organe 300 d'entraînement est configuré pour réaliser une connexion automatique des premier et deuxième connecteurs 100, 200 après que cette connexion ait été amorcée manuellement.

A cet effet, la tige 302 du vérin comprend une face de butée 304, par exemple un épaulement, destinée à venir en appui directement contre le clapet 208 ou contre un élément solidaire du clapet 208, comme un circlips 306, afin de déplacer le clapet 208 en position de dégagement. En outre, la tige 302 du vérin peut présenter une saillie 308 radiale permettant de provoquer le déplacement des organes 234 de verrouillage dans la gorge 133 pour verrouiller le clapet 208 au corps fixe 102 (c'est-à-dire ayant le même rôle que l'extrémité de l'organe 236 de poussée et la paroi latérale extérieure 238). La saillie 308 radiale présente en outre un pan 310 incliné de traction qui permet, par appui contre les organes 234 de verrouillage logés dans la gorge 133, de tracter le corps fixe 102. Simultanément, la face 306 de butée est en appui contre le clapet 208 et le tracte vers la position de dégagement.

La connexion a lieu de la manière suivante. Initialement la saillie 308 radiale est positionnée entre les organes 234 de verrouillage et la paroi de fond 254 ; la tige 302 du vérin peut être en appui contre cette paroi de fond 254. Un opérateur amorce la connexion en mettant manuellement en contact les premier et deuxième connecteurs 100, 200 comme décrit précédemment. A partir de l'instant où la gorge 133 parvient en regard des organes 234 de verrouillage, par exemple quand le corps fixe 102 parvient en appui contre le clapet 208, la connexion automatique peut être enclenchée. La tige 302 du vérin se rétracte, si bien que la saillie 308 radiale pousse les organes 234 de verrouillage dans la gorge 133 et verrouille ainsi le clapet 208 et le corps fixe 102. En continuant son déplacement, le pan 310 incliné de la saillie radiale pousse les organes 234 de verrouillage contre une paroi de la gorge 133, si bien que le corps fixe 102 est tracté, entraîné par la tige 302 du vérin à l'intérieur du deuxième connecteur 200. Comme la tige 302 du vérin appuie aussi contre le clapet 208 par l'intermédiaire de la face 304 de butée, celui-ci est déplacé simultanément jusqu'à la position de dégagement.

Pour déconnecter le premier et le deuxième connecteur 100, 200, il suffit à la tige 302 du vérin de pousser contre le clapet 208, notamment contre la paroi de fond 254, afin de déplacer le clapet 208 vers la position d'obturation. Ce faisant, la saillie 308 radiale cesse de maintenir les organes 234 de verrouillage dans la gorge 133.

L'invention concerne aussi le premier connecteur 100, et le deuxième connecteur 200, destinés à la mise en œuvre du dispositif 1 de connexion.

En particulier, le clapet 108 du premier connecteur comprend un premier élément de verrouillage, qui peut être la gorge 132 ou un organe de verrouillage mobile dans un alésage radial destiné à engager une gorge du corps fixe 202 du deuxième connecteur 200, et le corps fixe 102 du premier connecteur 100 comprend un deuxième élément de verrouillage, qui peut être la gorge 133 ou un organe de verrouillage mobile dans un alésage radial destiné à engager une gorge du clapet 208 deuxième connecteur 200. Le premier élément de verrouillage est destiné à coopérer par complémentarité de forme avec un premier élément de verrouillage du corps fixe 202 du deuxième connecteur 200 et le deuxième élément de verrouillage est destiné à coopérer par complémentarité de forme avec un deuxième élément de verrouillage du clapet 208 du deuxième connecteur 200.

Le corps fixe 202 du deuxième connecteur 200 comprend aussi un premier élément de verrouillage, complémentaire du premier élément de verrouillage du clapet 108, qui peut être le ou les organes 232 de verrouillage mobiles dans un alésage radial ou une gorge, et le clapet 208 comprend un deuxième élément de verrouillage, complémentaire du deuxième élément de verrouillage du corps fixe 102, qui peut être le ou les organes 234 de verrouillage ou une gorge.

Les premier et deuxième connecteurs 100, 200 selon l'invention peuvent par ailleurs comprendre tout ou partie des caractéristiques des connecteurs 100, 200 du dispositif 1 de connexion décrit précédemment.

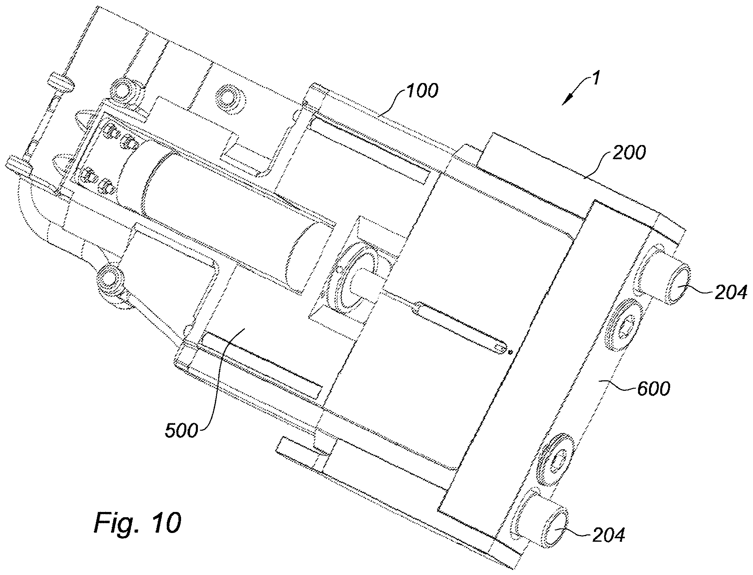

Comme illustré sur les figures 9 et 10, on notera que chaque connecteur 100, 200 pourrait comporter plusieurs corps fixes 102, 202, conduits 104, 204, clapets 108, 208, ouvertures de connexion 106, 206, premiers moyens de verrouillage et d'étanchéité, deuxièmes moyens de verouillage et d'étanchéité, moyens de blocage, etc., la connexion des connecteurs 100, 200 permettant d'établir une communication fluidique entre la pluralité de conduits 104 du premier connecteur 100 et la pluralité de conduits 204 du deuxième connecteur 200, de la même manière que décrit précédemment. Les corps fixes 102 sont supportés par un premier support 500 qui leur est solidaire. De façon similaire, les corps fixes 202 sont supportés par un deuxième support 600 qui leur est solidaire. Le cas échéant, le dispositif 1 de connexion comprend un unique système de verrouillage 400, qui est donc commun à tous les corps fixes 102, 202, conduits 104, 204, etc. du dispositif 1 de connexion. Les moyens d'indexation peuvent être ménagés au niveau des supports 500, 600. Les moyens d'indexation sont également communs à tous les corps fixes 102, 202, conduits 104, 204, etc. du dispositif 1 de connexion.

Bien entendu, l'invention n'est nullement limitée au mode de réalisation décrit ci-dessus, ce mode de réalisation n'ayant été donné qu'à titre d'exemple. Des modifications sont possibles sans sortir pour autant du domaine de protection de r l'invention défini par les revendications.

## Revendications

1. Dispositif (1) de connexion comprenant un premier connecteur (100) et un deuxième connecteur (200), le premier connecteur (100) et le deuxième connecteur (200) comprenant un corps fixe (102, 202), le corps fixe (102, 202) délimitant un conduit (104, 204) de circulation d'un fluide débouchant sur une ouverture (106, 206) de connexion, et un clapet (108, 208) mobile par rapport au corps fixe (102, 202) entre une position d'obturation, dans laquelle le clapet (108, 208) obture l'ouverture (106, 206) de connexion, et une position de dégagement, dans laquelle le clapet (108, 208) libère un passage à travers l'ouverture (106, 206) de connexion, dans lequel le dispositif (1) de connexion comprend en outre des premiers moyens de verrouillage, configurés pour verrouiller le clapet (108) mobile du premier connecteur (100) au corps fixe (202) du deuxième connecteur (200), et des deuxièmes moyens de verrouillage, configurés pour verrouiller le corps fixe (102) du premier connecteur (100) au clapet (208) mobile du deuxième connecteur (200), dans lequel les premier et deuxième connecteurs (100, 200) comprennent des moyens de rappel pour rappeler chaque clapet (108, 208) en position d'obturation.

2. Dispositif (1) de connexion selon la revendication la revendication 1, dans lequel le dispositif (1) de connexion comprend des moyens de blocage configurés pour maintenir verrouillés le clapet (108) mobile du premier connecteur (100) et la partie fixe (202) du deuxième connecteur (200), ainsi que la partie fixe (102) du premier connecteur (100) et le clapet (208) mobile du deuxième connecteur (200), tant que les clapets (108, 208) sont hors de leur position d'obturation.

3. Dispositif (1) de connexion selon la revendication la revendication 1 ou 2, dans lequel les clapets (108, 208) sont mobiles en translation par rapport aux corps fixes (102, 202) selon un axe de translation sensiblement perpendiculaire à une normale aux ouvertures (106, 206) de connexion.

4. Dispositif (1) de connexion selon l'une des revendications 1 à 3, dans lequel au moins l'un des connecteurs (100, 200) parmi le premier connecteur (100) et le deuxième connecteur (200) comprend deux organes (141, 241) d'étanchéité destinés à empêcher une fuite de fluide entre le corps fixe (102, 202) et le clapet (108, 208) de ce connecteur quand le clapet (108, 208) est en position d'obturation, les deux organes (141, 241) d'étanchéité étant supportés par une même pièce de ce connecteur (100, 200).

5. Dispositif (1) de connexion selon l'une des revendications 1 à 4, dans lequel au moins l'un des connecteurs (100, 200) parmi le premier connecteur (100) et le deuxième connecteur (200) comprend deux organes (141, 241) d'étanchéité destinés à empêcher une fuite de fluide entre le corps fixe (102, 202) et le clapet (108, 208) de ce connecteur (100, 200) quand le clapet (108, 208) est en position d'obturation, les deux organes d'étanchéité (141, 241) étant agencés hors du conduit (104, 204) délimité par le corps fixe (102, 202) de ce connecteur (100, 200).

6. Dispositif (1) de connexion selon l'une des revendications 1 à 5, dans lequel le conduit (104, 204) de circulation d'un fluide du premier et du deuxième connecteur (100, 200) délimite une section de passage libre.

7. Dispositif (1) de connexion selon l'une des revendications 1 à 6, dans lequel le dispositif (1) de connexion comprend des moyens de régulation du débit de fluide destiné à circuler à travers les premier et deuxième connecteurs (100, 200).

8. Dispositif (1) de connexion selon l'une des revendications 1 à 7, dans lequel le dispositif (1) de connexion comprend des moyens de connexion automatique des premier et deuxième connecteurs (100, 200).

9. Dispositif (1) de connexion selon l'une des revendications 1 à 8, dans lequel le dispositif (1) de connexion comprend un système de verrouillage (400) configuré pour verrouiller le premier connecteur (100) et le deuxième connecteur (200) une fois connectés, ce système de verrouillage étant distinct des premiers et deuxièmes moyens de verrouillage.

10. Procédé de connexion d'un premier connecteur (100) et d'un deuxième connecteur (200) d'un dispositif (1) de connexion selon l'une des revendications 1 à 9, comprenant une première étape de verrouillage, permettant le verrouillage du clapet (108, 208) de chaque connecteur (100, 200) parmi les premier et deuxième connecteurs (100, 200) au corps fixe (102, 202) de l'autre connecteur desdits premier et deuxième connecteurs (100, 200), puis une deuxième étape de verrouillage, distincte de la première étape de verrouillage, permettant le verrouillage du premier connecteur (100) au deuxième connecteur (200).

## Patentansprüche

1. Verbindungsvorrichtung (1), umfassend einen ersten Verbinder (100) und einen zweiten Verbinder (200), wobei der erste Verbinder (100) und der zweite Verbinder (200) einen festen Körper (102, 202) umfassen, wobei der feste Körper (102, 202) eine Zirkulationsleitung (104, 204) eines Fluids begrenzt, die auf einer Verbindungsöffnung (106, 206) ausmündet, und ein Ventil (108, 208), das im Verhältnis zum festen Körper (102, 202) zwischen einer Verschlussposition, in welcher das Ventil (108, 208) die Verbindungsöffnung (106, 206) verschließt, und einer Freigabeposition, in welcher das Ventil (108, 208) einen Durchgang durch die Verbindungsöffnung (106, 206) freigibt, beweglich ist, wobei die Verbindungsvorrichtung (1) ferner erste Verriegelungsmittel umfasst, die ausgelegt sind, um das bewegliche Ventil (108) des ersten Verbinders (100) am festen Körper (202) des zweiten Verbinders (200) zu verriegeln, und zweite Verriegelungsmittel, die ausgelegt sind, um den festen Körper (102) des ersten Verbinders (100) am beweglichen Ventil (208) des zweiten Verbinders (200) zu verriegeln, wobei der erste und zweite Verbinder (100, 200) Rückstellmittel umfassen, um jedes Ventil (108, 208) in Verschlussposition zurückzustellen.

2. Verbindungsvorrichtung (1) nach Anspruch 1, wobei die Verbindungsvorrichtung (1) Arretierungsmittel umfasst, die ausgelegt sind, um das bewegliche Ventil (108) des ersten Verbinders (100) und den festen Teil (202) des zweiten Verbinders (200) sowie den festen Teil (102) des ersten Verbinders (100) und das bewegliche Ventil (208) des zweiten Verbinders (200) verriegelt zu halten, solange die Ventile (108, 208) außerhalb ihrer Verschlussposition sind.

3. Verbindungsvorrichtung (1) nach Anspruch 1 oder 2, wobei die Ventile (108, 208) im Verhältnis zu den festen Körpern (102, 202) gemäß einer Translationsachse, die etwa senkrecht zu einer Normalen zu den Verbindungsöffnungen (106, 206) ist, translatorisch beweglich sind.

4. Verbindungsvorrichtung (1) nach einem der Ansprüche 1 bis 3, wobei mindestens einer der Verbinder (100, 200) von dem ersten Verbinder (100) und dem zweiten Verbinder (200) zwei Dichtungsorgane (141, 241) umfasst, die bestimmt sind, ein Austreten von Fluid zwischen dem festen Körper (102, 202) und dem Ventil (108, 208) dieses Verbinders zu verhindern, wenn das Ventil (108, 208) in Verschlussposition ist, wobei die zwei Dichtungsorgane (141, 241) von demselben Teil dieses Verbinders (100, 200) getragen werden.

5. Verbindungsvorrichtung (1) nach einem der Ansprüche 1 bis 4, wobei mindestens einer der Verbinder (100, 200) von dem ersten Verbinder (100) und dem zweiten Verbinder (200) zwei Dichtungsorgane (141, 241) umfasst, die bestimmt sind, ein Austreten von Fluid zwischen dem festen Körper (102, 202) und dem Ventil (108, 208) dieses Verbinders (100, 200) zu verhindern, wenn das Ventil (108, 208) in Verschlussposition ist, wobei die zwei Dichtungsorgane (141, 241) außerhalb der Leitung (104, 204) eingerichtet sind, die von dem festen Körper (102, 202) dieses Verbinders (100, 200) begrenzt ist.

6. Verbindungsvorrichtung (1) nach einem der Ansprüche 1 bis 5, wobei die Zirkulationsleitung (104, 204) eines Fluids des ersten und des zweiten Verbinders (100, 200) einen freien Durchgangsquerschnitt begrenzt.

7. Verbindungsvorrichtung (1) nach einem der Ansprüche 1 bis 6, wobei die Verbindungsvorrichtung (1) Reguliermittel des Durchflusses des Fluids umfasst, das bestimmt ist, durch den ersten und zweiten Verbinder (100, 200) zu zirkulieren.

8. Verbindungsvorrichtung (1) nach einem der Ansprüche 1 bis 7, wobei die Verbindungsvorrichtung (1) automatische Verbindungsmittel des ersten und zweiten Verbinders (100, 200) umfasst.

9. Verbindungsvorrichtung (1) nach einem der Ansprüche 1 bis 8, wobei die Verbindungsvorrichtung (1) ein Verriegelungssystem (400) umfasst, das ausgelegt ist, um den ersten Verbinder (100) und den zweiten Verbinder (200) zu verriegeln, nachdem sie verbunden sind, wobei dieses Verriegelungssystem von den ersten und zweiten Verriegelungsmitteln verschieden ist.

10. Verfahren zur Verbindung eines ersten Verbinders (100) und eines zweiten Verbinders (200) einer Verbindungsvorrichtung (1) nach einem der Ansprüche 1 bis 9, umfassend einen ersten Verriegelungsschritt, der die Verriegelung des Ventils (108, 208) jedes Verbinders (100, 200) von dem ersten und zweiten Verbinder (100, 200) am festen Körper (102, 202) des anderen Verbinders von dem ersten und zweiten Verbinder (100, 200) gestattet, dann einen zweiten Verriegelungsschritt, der von dem ersten Verriegelungsschritt verschieden ist, der die Verriegelung des ersten Verbinders (100) am zweiten Verbinder (200) gestattet.

## Claims

1. A connection device (1) comprising a first connector (100) and a second connector (200), the first connector (100) and the second connector (200) comprising a fixed body (102, 202), the fixed body (102, 202) delimiting a conduit (104, 204) for circulating a fluid leading to a connection opening (106, 206), and a valve (108, 208) movable relative to the fixed body (102, 202) between a close-off position, in which the valve (108, 208) closes off the connection opening (106, 206), and a clearing position, in which the valve (108, 208) clears a passage through the connection opening (106, 206), wherein the connection device (1) further comprises first locking means, configured to lock the movable valve (108) of the first connector (100) to the fixed body (202) of the second connector (200), and second locking means, configured to lock the fixed body (102) of the first connector (100) to the movable valve (208) of the second connector (200), wherein the first and second connectors (100, 200) comprise return means for biasing each valve (108, 208) to the close-off position.

2. The connection device (1) according to claim 1, wherein the connection device (1) comprises blocking means configured to keep locked the movable valve (108) of the first connector (100) and the fixed portion (202) of the second connector (200), as well as the fixed portion (102) of the first connector (100) and the movable valve (208) of the second connector (200), as long as the valves (108, 208) are out of their close-off position.

3. The connection device (1) according to claim 1 or 2, wherein the valves (108, 208) are movable in translation relative to the fixed bodies (102, 202) according to a translation axis substantially perpendicular to a normal to the connection openings (106, 206).

4. The connection device (1) according to any of claims 1 to 3, wherein at least one of the connectors (100, 200) among the first connector (100) and the second connector (200) comprises two sealing members (141, 241) intended to prevent a fluid leakage between the fixed body (102, 202) and the valve (108, 208) of this connector when the valve (108, 208) is in the close-off position, the two sealing members (141, 241) being supported by the same part of this connector (100, 200).

5. The connection device (1) according to any of claims 1 to 4, wherein at least one of the connectors (100, 200) among the first connector (100) and the second connector (200) comprises two sealing members (141, 241) intended to prevent a fluid leakage between the fixed body (102, 202) and the valve (108, 208) of this connector (100, 200) when the valve (108, 208) is in the close-off position, the two sealing members (141, 241) being arranged outside the conduit (104, 204) delimited by the fixed body (102, 202) of this connector (100, 200).

6. The connection device (1) according to any of claims 1 to 5, wherein the conduit (104, 204) for circulating a fluid of the first and second connectors (100, 200) delimits a free passage section.

7. The connection device (1) according to any of claims 1 to 6, wherein the connection device (1) comprises means for regulating the flow rate of the fluid intended to circulate through the first and second connectors (100, 200).

8. The connection device (1) according to any of claims 1 to 7, wherein the connection device (1) comprises means for automatically connecting the first and second connectors (100, 200).

9. The connection device (1) according to any of claims 1 to 8, wherein the connection device (1) comprises a locking system (400) configured to lock the first connector (100) and the second connector (200) once connected, this locking system being separate from the first and second locking means.

10. A method of connecting a first connector (100) and a second connector (200) of a connection device (1) according to any of claims 1 to 9, comprising a first locking step, enabling locking of the valve (108, 208) of each connector (100, 200) among the first and second connectors (100, 200) to the fixed body (102, 202) of the other connector of said first and second connectors (100, 200), then a second locking step, separate from the first locking step, enabling locking of the first connector (100) to the second connector (200).
